(19) Europäisches Patentamt
European Patent Office
Office européen des brevets

(11) EP 4 234 677 A1

(12) EUROPEAN PATENT APPLICATION
published in accordance with Art. 153(4) EPC

(43) Date of publication:
30.08.2023 Bulletin 2023/35

(51) International Patent Classification (IPC):
C12M 1/00 (2006.01)    G01N 1/00 (2006.01)
G01N 1/28 (2006.01)

(21) Application number: 21885859.5

(22) Date of filing: 07.10.2021

(52) Cooperative Patent Classification (CPC):
C12M 1/00; G01N 1/00; G01N 1/28

(86) International application number:
PCT/JP2021/037177

(87) International publication number:
WO 2022/091740 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.10.2020 JP 2020179184

(71) Applicant: Shimadzu Corporation
Nakagyo-ku,
Kyoto-shi,
Kyoto 604-8511 (JP)

(72) Inventors:
• HANAFUSA, Nobuhiro
Kyoto-shi, Kyoto 604-8511 (JP)
• SASAYAMA, Tomoki
Kyoto-shi, Kyoto 604-8511 (JP)
• SHIBUTANI, Ryuta
Kyoto-shi, Kyoto 604-8511 (JP)
• KITAMURA, Kenichi
Kyoto-shi, Kyoto 604-8511 (JP)

(74) Representative: Müller-Boré & Partner
Patentanwälte PartG mbB
Friedenheimer Brücke 21
80639 München (DE)

(54) ANALYSIS APPARATUS

(57) There is provided an analysis apparatus capable of reducing a possibility of infection and contamination. An analysis apparatus (2) comprises: a housing (200) that has an opening (221); an upper door (211) that opens and closes the opening (221); a holding device (40) that is accommodated in the housing (200) and allows an analyte container to be set therein, the analyte container containing an analyte to be analyzed; a blower (230) that creates an airflow in the housing (200); and an air filter (240) that filters air blown by the blower (230). As seen along an airflow created by the blower (230) while the upper door (211) is opened, the holding device (40) is provided upstream of the blower (230), the opening (221) is provided upstream of the holding device (40), and the air filter (240) is provided downstream of the holding device (40).

FIG.5

EP 4 234 677 A1

## Description

TECHNICAL FIELD

The present disclosure relates to an analysis apparatus for analyzing infectious viruses or genes contained in an analyte (a biological sample such as blood, urine, bodily fluid obtained with a nasopharyngeal swab, saliva, etc.) to be analyzed.

BACKGROUND ART

Conventionally, there is an apparatus for analyzing a gene contained in an analyte through polymerase chain reaction (PCR) (for example, see Japanese Patent No. 4785862).

CITATION LIST

PATENT LITERATURE

PTL 1: Japanese Patent 4785862

SUMMARY OF INVENTION

TECHNICAL PROBLEM

When an analyte is set in an analysis apparatus, and the analyte in analysis is dispensed and agitated and the analyte and a used dispensing pipette tip are extracted from the apparatus, etc., there is a possibility that the analyte splashes, viruses adhering to dust float, etc., and the operator may be infected therewith and the analyte may be contaminated therewith.

The present disclosure proposes an analysis apparatus capable of reducing a possibility of infection and contamination.

SOLUTION TO PROBLEM

The presently disclosed analysis apparatus comprises: a housing that has an opening; a door that opens and closes the opening; an analyte container setting section that is accommodated in the housing and allows an analyte container to be set therein, the analyte container containing an analyte to be analyzed; a blower that creates an airflow in the housing; and an air filter that filters air blown by the blower. As seen along an airflow created by the blower while the door is opened, the analyte container setting section is provided upstream of the blower, the opening is provided upstream of the analyte container setting section, and the air filter is provided downstream of the analyte container setting section.

ADVANTAGEOUS EFFECTS OF INVENTION

In the present disclosure, the blower induces air around the housing to create an airflow. The blower creates the airflow through the opening, the analyte container setting section, and the air filter in this order. The blower is provided downstream of the opening as seen along the airflow.

When the operator sets a subject to be analyzed such as an analyte container in the analysis apparatus, a flow of air through the opening into the housing is created to prevent harmful substances such as viruses contained in an analyte from being discharged toward the operator. This can reduce a possibility that the operator may be infected with the viruses or the like. The air flowing into the housing through the opening passes around the analyte container setting section. Creating a flow of air around the analyte container setting section suppresses floating and entering of an analyte in an analyte container into another analyte container and can thus reduce a possibility of analyte contamination. The air having passed around the analyte container setting section is sucked into the air filter and thus filtered thereby. The air filter adsorbs and thus removes harmful substances from air, and thus allows harmless air be discharged outside the housing.

BRIEF DESCRIPTION OF DRAWINGS

Fig. 1 schematically shows an example of a configuration of an analysis system.
Fig. 2 shows a holding device in which a container is set, as viewed in a direction along a Z-axis.
Fig. 3 is a cross section of the holding device in which a container is set, as viewed in a direction along the Y-axis.
Fig. 4 schematically shows each step of an analysis process performed by an analysis apparatus.
Fig. 5 is a schematic cross section of an internal configuration of a housing.
Fig. 6 is a schematic cross section of the internal configuration of the housing with an upper door closed.
Fig. 7 is a schematic plan view generally showing a configuration of a moving device.
Fig. 8 is a front perspective view of the moving device shown in Fig. 7.
Fig. 9 is a perspective, enlarged view of a vicinity of a holding section mounted on a movable plate.
Fig. 10 schematically shows a configuration of an optical unit.
Fig. 11 is a perspective view showing a configuration of a fluorescence spectroscopy section.
Fig. 12 schematically illustrates an optical path when measuring light of a light source.
Fig. 13 is a partial cross section specifically showing a configuration of a temperature adjustment section in an exemplary variation.
Fig. 14 is a cross section of the temperature adjustment section taken along a line XIV-XIV indicated in Fig. 13.

Fig. 15 is a cross section specifically showing a configuration of the temperature adjustment section in another exemplary variation.

DESCRIPTION OF EMBODIMENTS

Hereinafter, embodiments of the present disclosure will be described in detail with reference to the accompanying drawings. In the figures, identical or corresponding components are identically denoted and will not be described repeatedly.

<Configuration of Analysis System 1>

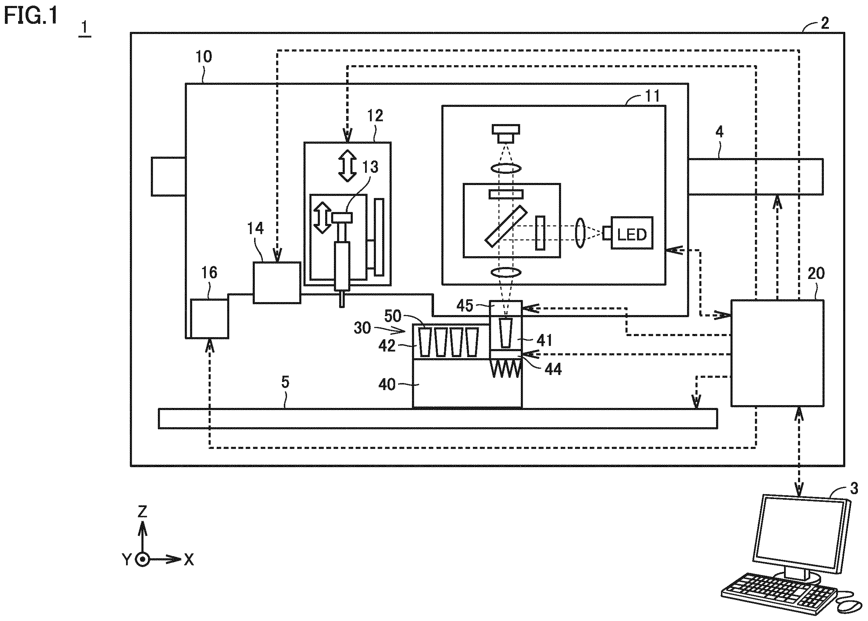

Fig. 1 schematically shows an example of a configuration of an analysis system 1 according to the present embodiment. Analysis system 1 is an apparatus capable of fully automatically performing a process of measuring and analyzing gene amplification by PCR over time (in real time). Hereinafter, as shown in Fig. 1, a direction along a vertical direction (in Fig. 1, an upward/downward direction) will also be referred to as a "Z-axis direction," and directions perpendicular to the vertical direction and orthogonal to each other will also be referred to as an "X-axis direction" and a "Y-axis direction," respectively.

Analysis system 1 comprises an analysis apparatus 2 and a terminal 3 capable of communicating with analysis apparatus 2. Terminal 3 is a general personal computer including a display and operated by an operator.

Analysis apparatus 2 includes an inspection device 10, a control device 20, a temperature adjustment device 30, and moving devices 4 and 5. Temperature adjustment device 30 includes a holding device (a holder) 40 configured to be capable of holding a plurality of containers 50 or the like. Holding device 40 includes a temperature adjustment section 41 and a holding section 42. Temperature adjustment section 41 has a temperature adjustment function (a heating function and a cooling function) by a temperature source 44 represented by a Peltier element, a heater, a cooling device, and the like, and a heat lid 45. Holding section 42 has no temperature adjustment function.

Moving device 4 includes an actuator (not shown) that moves inspection device 10 in a horizontal direction (the X- and Y-axis directions). Moving device 5 includes an actuator (not shown in Fig. 1) that moves holding device 40 in the horizontal direction (the X- and Y-axis directions). The actuators of the moving devices 4 and 5 operate in response to a command issued from control device 20. By moving at least one of inspection device 10 and holding device 40 in the horizontal direction by moving devices 4 and 5, a relative distance between inspection device 10 and holding device 40 in the horizontal direction can be adjusted. Either one of moving devices 4 and 5 may be dispensed with.

Inspection device 10 includes an optical unit 11, a dispensing unit 12, an opening/closing unit 14, and an irradiation unit 16.

Dispensing unit 12 is provided with a syringe 13 having a tip to which a nozzle extending in the Z-axis direction is attached. A plunger (not shown) movable in the Z-axis direction is provided inside the nozzle. Syringe 13 is configured to suck liquid in an amount corresponding to an amount of a stroke of the plunger in a positive direction along the Z-axis and discharge liquid in an amount corresponding to an amount of a stroke of the plunger in a negative direction along the Z-axis. Dispensing unit 12 includes an actuator (not shown) for moving syringe 13 in the Z-axis direction and an actuator (not shown) for stroking the plunger in the nozzle in the Z-axis direction. These actuators operate in response to a command issued from control device 20.

Opening/closing unit 14 includes an opening/closing mechanism having a projection that comes into contact with and automatically opens/closes a lid of container 50 held by holding device 40. Opening/closing unit 14 operates in response to a command issued from control device 20.

Irradiation unit 16 prevents contamination by irradiating the projection of opening/closing unit 14 and a vicinity thereof with UV light (a ultraviolet ray) in view of a possibility that when opening/closing unit 14 opens/closes the lid of container 50 an analyte may adhere to the projection of opening/closing unit 14 and contaminate a next analyte.

Optical unit 11 is a device for analyzing infectious viruses or genes contained in an analyte in container 50 by detecting fluorescence emitted from the analyte when the analyte is irradiated with excitation light. Optical unit 11 detects fluorescence for three wavelengths of red (R), green (G), and blue (B), respectively, and outputs a result thereof to control device 20. Optical unit 11 includes a light source (e.g., a light emitting diode) which emits light, a lens for irradiating an analyte with light from the light source and collecting fluorescence of the analyte, etc., and a photodiode for detecting fluorescence emitted from the analyte and converting the detected fluorescence into analyzable digital data, etc.

Although not shown, control device 20 includes a CPU (a central processing unit), a memory, an input/output buffer, etc. Upon receiving a start analysis command from terminal 3, control device 20 controls each part of analysis apparatus 2 (each unit in inspection device 10, moving devices 4 and 5, and temperature source 44 and heat lid 45 of temperature adjustment device 30) in accordance with a predetermined procedure to analyze infectious viruses or genes contained in the analyte. Control device 20 causes a display of terminal 3 to display an analysis result of analysis apparatus 2.

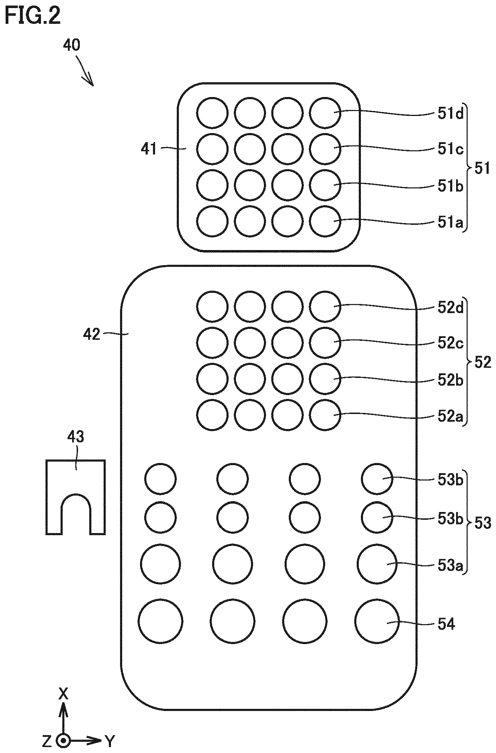

Fig. 2 shows holding device 40 in which container 50 is set, as viewed in a direction along the Z-axis. Holding device 40 has an arrangement surface extending in the XY plane and allowing a plurality of containers 50 to be two-dimensionally disposed therein. Inspection device 10 and holding device 40 are configured to be movable relative to each other two-dimensionally along the arrangement surface of the holding devices 40 by moving devices 4 and 5.

Container 50 disposed in the arrangement surface of holding device 40 includes a PCR container (a reaction container) 51 receiving a liquid to be subjected to a thermal cycle (an analyte to which each reagent is added), a reagent container 52 receiving each reagent, and an analyte container 54 receiving an analyte alone.

Four PCR containers 51a, 51b, 51c and 51d disposed one-dimensionally in the X-axis direction are set as one set, and four such sets of PCR containers 51 are disposed in the Y-axis direction.

Four reagent containers 52a, 52b, 52c and 52d disposed one-dimensionally in the X-axis direction are set as one set, and four such sets of reagent containers 52 are disposed in the Y-axis direction. Reagent container 52a contains an analyte treatment liquid in advance. Reagent container 52b contains a reaction liquid in advance. Reagent container 52c contains a primer/probe liquid (a liquid containing a primer and a probe) in advance. Reagent container 52d contains an enzyme liquid in advance. Four reagent containers 52a, 52b, 52c and 52d are provided (or commercially available) as one set as a reagent kit such that the reagents are sealed in advance in an amount necessary for analyzing at least one analyte.

Four analyte containers 54 are disposed one-dimensionally in the Y-axis direction. In analysis apparatus 2 according to the present embodiment, by introducing different analytes in four analyte containers 54, respectively, disposed in the Y-axis direction, four analytes can be analyzed at one time.

A step (a hole or a depression) in which a portion of each container 50 (PCR container 51, reagent container 52, and analyte container 54) can be inserted in the Z-axis direction is formed in holding device 40 at a position where each container 50 is disposed. By inserting each container 50 along a corresponding step, each container 50 is positionally fixed in the X-axis direction and the Y-axis direction.

A dispensing pipette tip 53 for dispensing an analyte and a reagent is disposed in an area of holding device 40 between reagent container 52 and analyte container 54. Dispensing pipette tip 53 is attached to the nozzle of syringe 13 and thus used.

In the present embodiment, dispensing pipette tip 53 includes a long pipette tip 53a used for analyte container 54 and a short pipette tip 53b (a pipette tip for a small amount) used for PCR container 51 and reagent container 52. One long pipette tip 53a and two short pipette tips 53b disposed one-dimensionally in the X-axis direction are provided as one set, and four such sets of dispensing pipette tips 53 are disposed in the Y-axis direction.

PCR container 51 to be subjected to a thermal cycle is disposed in temperature adjustment section 41 having a temperature adjustment function, and reagent container 52, dispensing pipette tip 53 and analyte container 54 are disposed in holding section 42 having no temperature adjustment function.

Further, holding device 40 is provided with a pipette tip discarding section 43 for discarding dispensing pipette tip 53 used. When dispensing pipette tip 53 fitted to the nozzle of syringe 13 is detached from the nozzle, an upper end of dispensing pipette tip 53 is hooked on to a lower surface of a recess of pipette tip discarding section 43 and the nozzle is moved upward, whereby dispensing pipette tip 53 is detached from the nozzle and discarded.

Although not shown in Fig. 2, each container 50 has a container body and a lid which can be opened/closed with respect to the container body. Each container 50 is a resin molded product having the lid and the container body integrated together.

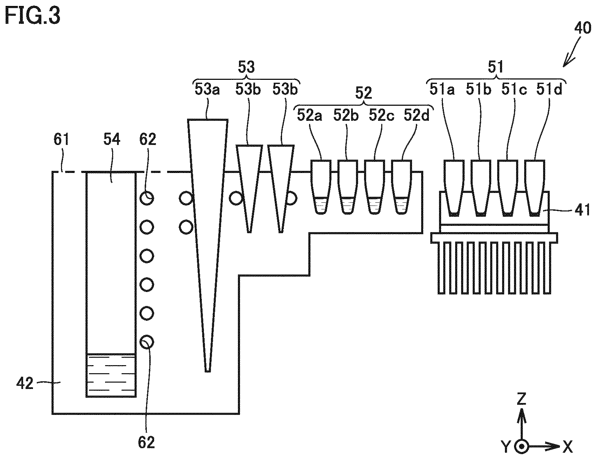

Fig. 3 is a cross section of holding device 40 with container 50 set, as viewed in a direction along the Y-axis. As is also shown in Fig. 2, holding device 40 receives analyte container 54, long pipette tip 53a, two short pipette tips 53b, reagent containers 52a, 52b, 52c and 52d, and PCR containers 51a, 51b, 51c and 51d disposed in this order in the X-axis direction.

As is also shown in Fig. 2, analyte container 54 is disposed in holding section 42. Holding section 42 corresponds to an analyte container setting section according to an embodiment allowing analyte container 54 to be set therein, the analyte container containing therein an analyte to be analyzed. Holding section 42 further allows reagent container 52 to be set therein, the reagent container containing a reagent therein to be used for an analysis. Holding section 42 further allows dispensing pipette tip 53 to be set therein for dispensing the analyte contained in analyte container 54 and the reagent contained in reagent container 52. Holding section 42 is hollowed.

Holding section 42 has an upper surface with a plurality of suction holes 61 (not shown in Fig. 2) for sucking air from outside holding section 42 into holding section 42. Suction holes 61 are formed in a vicinity of analyte container 54. Suction holes 61 are formed in the upper surface of holding section 42 in a vicinity of a step allowing analyte container 54 to be inserted. Typically, suction holes 61 are formed around the step allowing analyte container 54 to be inserted, and surrounds the step. Suction holes 61 are not limited to being formed in the vicinity of analyte container 54, and may be formed in a vicinity of reagent container 52 and dispensing pipette tip 53.

Holding section 42 has a side surface with a plurality of ventilation holes 62 allowing air to flow out from inside holding section 42 to outside holding section 42.

Ventilation holes 62 are formed in a vicinity of analyte container 54 and in a vicinity of dispensing pipette tip 53. Ventilation holes 62 may be provided as desired in number and location, and may also be formed in a bottom surface of holding unit 42 in addition to the side surface thereof.

<Analysis Process>

When an operator sets each container 50 (PCR container 51, reagent container 52, and analyte container 54) and dispensing pipette tip 53 (long pipette tip 53a and short pipette tip 53b) in holding device 40, and inputs a start analysis command to terminal 3 to start an analysis, analysis apparatus 2 starts an analysis process.

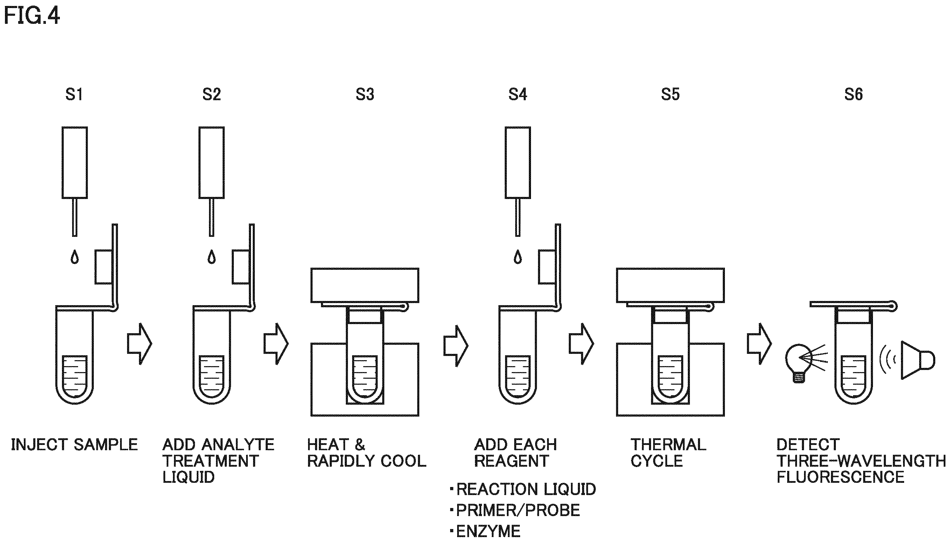

Fig. 4 schematically shows each step of the analysis process performed by analysis apparatus 2. In the analysis process, steps S1 to S6 are executed in this order.

Initially, in step S1, a step of dispensing 5 µL of an analyte into PCR container 51b (i.e., sample injection) is performed. Specifically, control device 20 initially controls dispensing unit 12 and moving devices 4 and 5 so that long pipette tip 53a is attached to the nozzle of syringe 13 and 25 µL of the analyte is collected from analyte container 54 and dispensed into PCR container 51a.

Subsequently, control device 20 controls dispensing unit 12 and moving devices 4 and 5 to discard long pipette tip 53a at pipette tip discarding section 43.

Subsequently, control device 20 controls dispensing unit 12 and moving devices 4 and 5 so that short pipette tip 53b is attached to the nozzle of syringe 13 and 5 µL of the analyte is collected from PCR container 51a and dispensed into PCR container 51b.

Note that long pipette tip 53a is used to collect 25 µL of the analyte and temporarily dispense the collected analyte into PCR container 51a and long pipette tip 53a is then replaced with short pipette tip 53b to collect 5 µL of the analyte from PCR container 51a and dispense the collected analyte into PCR container 51b in order to precisely dispense 5 µL of the analyte into PCR container 51b. In other words, the plunger provided inside the nozzle of syringe 13 is thin as it basically corresponds to short pipette tip 53b that dispenses a small amount, and, for the same amount of stroking, using long pipette tip 53a may result in dispensing with reduced precision and hence failing to obtain an accurate result. Accordingly, in the present embodiment, long pipette tip 53a is initially used to once collect an analyte and dispense the collected analyte in an amount of 25 µL, which is larger than 5 µL, into PCR container 51a different from PCR container 51b, and long pipette tip 53a is replaced with short pipette tip 53b, which is used to collect the analyte from PCR container 51a precisely in an amount of 5 µL and dispense the collected analyte into PCR container 51b. The analyte can thus be dispensed into PCR container 51b precisely in a small amount of 5 µL.

In the next step S2, 5 µL of an analyte treatment liquid is added to PCR container 51b. Specifically, control device 20 initially controls dispensing unit 12 and moving devices 4 and 5 to collect 5 µL of the analyte treatment liquid from reagent container 52a, dispense the 5 µL of the analyte treatment liquid into PCR container 51b, and reciprocate (or vertically move) syringe 13 to agitate the contents in PCR container 51b.

Subsequently, control device 20 controls dispensing unit 12 and moving devices 4 and 5 to discard short pipette tip 53b in pipette tip discarding section 43.

In the next step S3, PCR container 51b is heated and rapidly cooled. Specifically, control device 20 controls temperature adjustment section 41 so that PCR container 51b is heated to maintain the analyte in PCR container 51b at a temperature of 90°C for 5 minutes, and thereafter PCR container 51b is rapidly cooled to return the temperature of the analyte in PCR container 51b to 20°C (or room temperature).

PCR container 51b is inserted into a step that is a recess in an upper surface of temperature adjustment section 41. Temperature adjustment section 41 is an excellently thermally conductive metal plate formed for example of aluminum. Temperature adjustment section 41 is in thermal contact with temperature source 44. An analyte in PCR container 51b is controlled in temperature as temperature source 44 heats and cools temperature adjustment section 41 according to a preset program. This provides the analyte in a predetermined temperature profile suitable for a reaction.

Heat lid 45 is in thermal contact with the lid of PCR container 51b when the container body is closed by the lid. Heat lid 45 is a metal plate with a heating source such as a sheet heater attached thereto. The heating source heats the lid and thus prevents liquid from vaporizing in PCR container 51b and changing a condition for the reaction.

In the next step S4, each reagent is added to PCR container 51b. Specifically, control device 20 controls dispensing unit 12 and moving devices 4 and 5 to initially collect 7.8 µL of a reaction liquid from reagent container 52b and dispense the collected reaction liquid into reagent container 52d containing 2.4 µL of an enzyme in advance.

Subsequently, control device 20 controls dispensing unit 12 and moving devices 4 and 5 to collect 7.8 µL of a primer/probe liquid from reagent container 52c, dispense the collected liquid into reagent container 52d, and reciprocate (or vertically move) syringe 13 to agitate the contents in reagent container 52d. At this point in time, reagent container 52d contains a reagent mixture liquid in an amount of 18 µL.

Subsequently, control device 20 controls dispensing unit 12 and moving devices 4 and 5 to collect 15 µL of the reagent mixture liquid from reagent container 52d, dispenses the 15 µL of the reagent mixture liquid into PCR container 51b, and reciprocate (or vertically move) syringe 13 to agitate the contents in PCR container 51b.

In the next step S5, PCR container 51b undergoes a thermal cycle process. Specifically, control device 20 controls temperature adjustment section 41 to maintain the liquid in PCR container 51b at a temperature of 42°C for 10 minutes to cause a reverse transcription reaction, and thereafter maintain the liquid in PCR container 51b at a temperature of 95°C for 1 minute to activate the enzyme.

Subsequently, control device 20 controls temperature adjustment section 41 to maintain the liquid in PCR container 51b at a temperature of 95°C for 5 seconds and thereafter maintain the liquid in PCR container 51b at a temperature of 60°C for 30 seconds to perform an amplification process to amplify a gene. This amplification process is performed for 45 cycles.

In the next step S6, three-wavelength fluorescence detection is performed. Specifically, after the amplification process, control device 20 controls temperature adjustment section 41 and optical unit 11 to subject the liquid in PCR container 51b to three-wavelength fluorescence detection while setting the liquid in PCR container 51b at a temperature of 60°C. The three-wavelength fluorescence detection is performed whenever the amplification process is performed. A result of the three-wavelength fluorescence detection (a result of the analysis process by analysis apparatus 2) is displayed on a display of terminal 3.

<Internal Configuration of Housing 200>

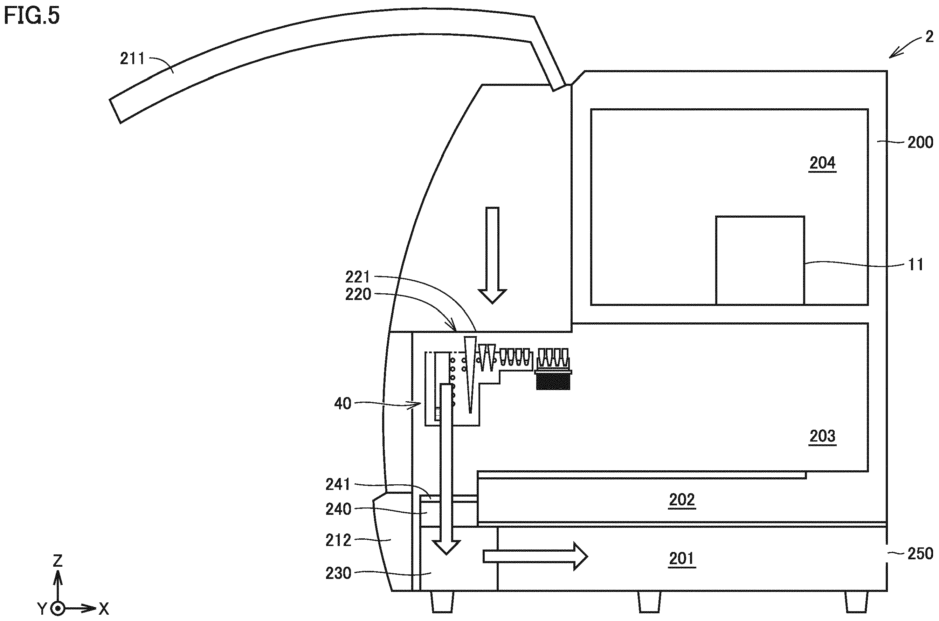

Hereinafter, a housing 200 that houses each configuration included in analysis apparatus 2, and an internal configuration of housing 200 will be described. Fig. 5 is a schematic cross section of the internal configuration of housing 200. As shown in Fig. 5, analysis apparatus 2 comprises housing 200.

Housing 200 internally has a structure of four floors and is provided with a first floor portion 201, a second floor portion 202, a third floor portion 203, and a fourth floor portion 204 in this order from the bottom toward the top. Optical unit 11 also shown in Fig. 1 and holding device 40 described with reference to Figs. 2 and 3 are housed in housing 200. More specifically, holding device 40 is disposed in third floor portion 203. Optical unit 11 is disposed in fourth floor portion 204.

Housing 200 has a front surface on a side where an operator accesses analysis apparatus 2, and a rear surface opposite to the front surface. In Fig. 5, a left surface of housing 200 is the front surface, and a right surface of housing 200 is the rear surface. Holding device 40 shown in Fig. 5 is disposed inside housing 200 on the side of the front surface.

Housing 200 has an opening 221. Opening 221 is provided on the side of the front surface of housing 200. More specifically, opening 221 is formed at a portion of a ceiling portion of third floor portion 203. Opening 221 is open upward.

Housing 200 has an upper door 211 and a lower door 212. Upper door 211 and lower door 212 are configured to be openable and closable. Upper door 211 is opened and closed, for example, by rotating, with an upper edge thereof serving as an axis of rotation, relative to the body of housing 200. Upper door 211 rotates upward and thus opens. Lower door 212 is opened and closed, for example, by rotating, with a lower edge thereof serving as an axis of rotation, relative to the body of housing 200. Lower door 212 rotates downward and thus opens. Upper door 211 shown in Fig. 5 is in an open state. Lower door 212 shown in Fig. 5 is in a closed state.

Upper door 211 opens and closes opening 221. While upper door 211 is open, holding device 40 is externally exposed through opening 221. The operator can access holding device 40 through opening 221. Through opening 221, the operator can set each container 50 (PCR container 51, reagent container 52, and analyte container 54) and dispensing pipette tip 53 in holding device 40 inside housing 200. Thus, a user operation section 220 that is a space in which the operator sets container 50 and dispensing pipette tip 53 in holding device 40, is configured.

Housing 200 further houses a blower 230. Blower 230 is disposed in first floor portion 201. Blower 230 is disposed on a front side of housing 200. Blower 230 is disposed immediately behind lower door 212 in the closed state. Blower 230 is disposed below holding device 40. In Fig. 5, blower 230 is disposed directly under holding device 40. Blower 230 creates a flow of air in housing 200. A blank arrow shown in Fig. 5 indicates a direction of a flow of air created by blower 230.

While upper door 211 is open as shown in Fig. 5, blower 230 induces air around housing 200 to create an airflow from outside housing 200 into housing 200. As seen along the flow of air created by blower 230, holding device 40 is provided upstream of blower 230, and opening 221 is provided upstream of holding device 40. Blower 230 creates a negative pressure in a vicinity of opening 221.

The air that has passed through opening 221 and flowed into housing 200 passes around holding device 40 (or holding section 42) and flows downward. At least a portion of the air flows into holding section 42 through suction holes 61 and flows out of holding section 42 through ventilation holes 62. After the air flows around holding device 40, the air is sucked toward the back of housing 200. After the air flows around holding device 40, the air flows in a direction away from opening 221.

When the operator sets container 50 and dispensing pipette tip 53 in holding device 40, a flow of air through opening 221 into housing 200 is created. This suppresses discharging toward the operator of harmful substances such as viruses contained in an analyte.

Housing 200 further houses an air filter 240 and a prefilter 241. Air filter 240 is disposed above blower 230. Prefilter 241 is disposed above air filter 240. Air filter 240 is disposed directly above blower 230, and prefilter 241 is disposed directly above air filter 240. In Fig. 5, air filter 240 and prefilter 241 are disposed directly under holding device 40.

Air filter 240 is, for example, a HEPA (High Efficiency Particulate Air) filter. The HEPA filter is an air filter which has a particle trapping ratio of 99.97 % or more at a rated flow rate for particles having a particle size of 0.3 μm and exhibits performance with a processing pressure drop of 245 Pa or less (as defined according to JIS Z 8122). Air filter 240 may be another type of filter, such as a ULPA (Ultra Low Penetration Air) filter.

As seen along the flow of air created by blower 230, air filter 240 is provided downstream of holding device 40 (or holding section 42). The air flowing via holding device 40 passes through prefilter 241 and air filter 240 in this order. Air filter 240 and prefilter 241 filter air blown by blower 230. Air filter 240 adsorbs harmful substances such as viruses serving as an infection source and removes the harmful substances from the air. Prefilter 241 removes particles having a larger diameter than the harmful substances. For example, prefilter 241 removes dust from the air.

Air filter 240 and prefilter 241 are disposed on the front side of housing 200. Prefilter 241 and air filter 240 are disposed immediately behind lower door 212 in the closed state. The operator can easily access air filter 240 and prefilter 241 by opening lower door 212. Thus, the operator can easily perform maintenance operations such as cleaning or replacement of air filter 240 and prefilter 241.

As indicated in Fig. 5 by a blank arrow, the air having passed through blower 230 flows toward the rear surface of housing 200. An exhaust port 250 is formed through the rear surface of housing 200. Exhaust port 250 exhausts air outside housing 200. Air to be exhausted from housing 200 passes through exhaust port 250. By blower 230, air flowing through opening 221 into housing 200 passes through holding device 40, is filtered by prefilter 241 and air filter 240, and is exhausted toward the rear surface of housing 200.

In Fig. 5, air filter 240 and prefilter 241 are disposed upstream of blower 230 as seen along the flow of air. Air filter 240 and prefilter 241 are disposed between holding device 40 and blower 230 as seen along the flow of air. This arrangement is not exclusive, and air filter 240 and prefilter 241 may be disposed downstream of blower 230 as seen along the flow of air. Air filter 240 and prefilter 241 may be disposed between blower 230 and exhaust port 250 as seen along the flow of air.

<Moving Device 5>

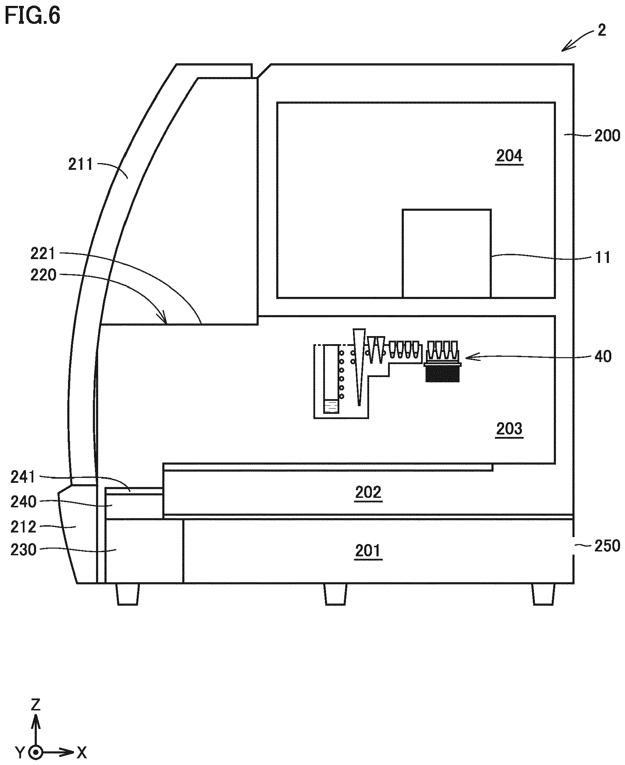

Fig. 6 is a schematic cross section of an internal configuration of housing 200 with upper door 211 closed. Upper door 211 in the closed state covers opening 221 of housing 200, and opening 221 is thus unexposed outside housing 200. While upper door 211 is closed, moving device 5 (see Fig. 1) operates to move holding device 40 inside housing 200 toward the rear surface. Performing the analysis process with holding device 40 moved away from opening 221 reduces a possibility that the operator is infected when an analyte splashes or the like as it is dispensed. Performing the analysis process while continuing to create a flow of air around holding device 40 further reduces a possibility that an analyte is contaminated when it is dispensed, agitated and/or the like.

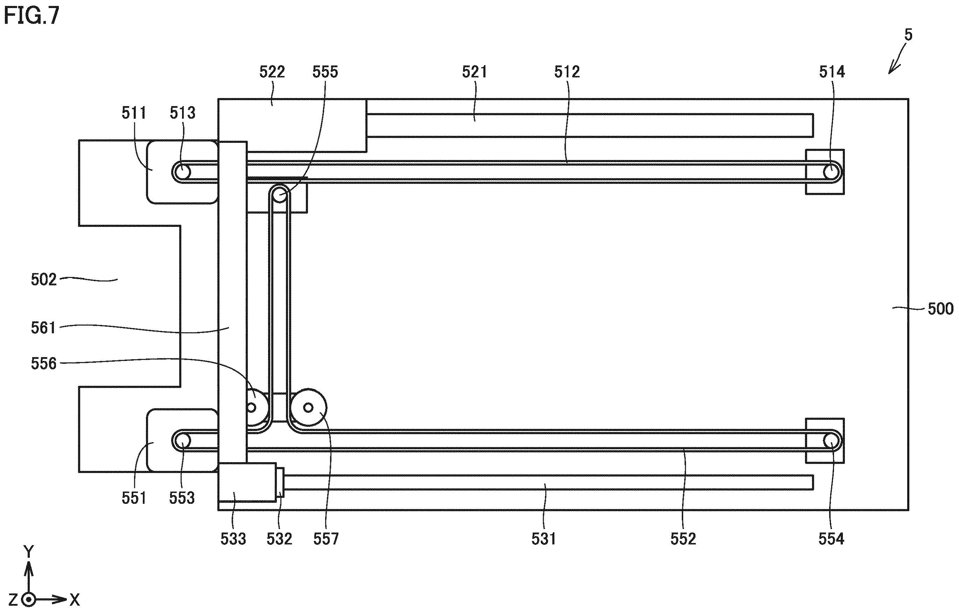

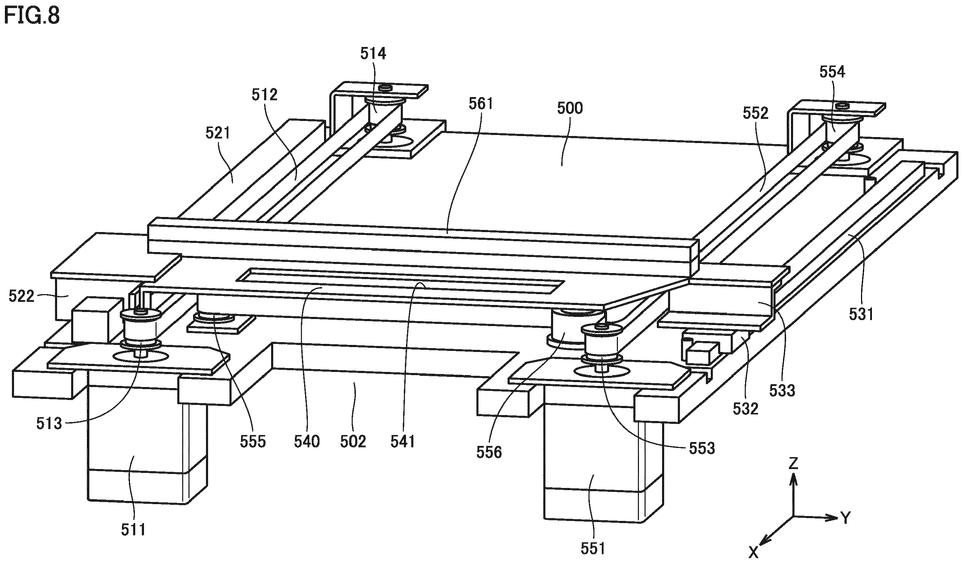

Moving device 5 will more specifically be described below. Fig. 7 is a schematic plan view showing a schematic configuration of moving device 5. Fig. 8 is a front perspective view of moving device 5 shown in Fig. 7.

Moving device 5 includes a plate-shaped support plate 500. Support plate 500 has a substantially rectangular shape in plan view. Support plate 500 constitutes a floor portion of third floor portion 203 of housing 200, and constitutes a ceiling portion of second floor portion 202 of housing 200. A notch 502 is provided at a front edge of support plate 500. A downward flow of air, indicated in Fig. 5 by a blank arrow extending from third floor portion 203 to first floor portion 201, flows from third floor portion 203 to second floor portion 202 through notch 502.

Moving device 5 includes an X-axis motor 511. X-axis motor 511 generates a driving force to move holding device 40 in the X-axis direction. X-axis motor 511 is supported by support plate 500 and arranged to be suspended below support plate 500. X-axis motor 511 is disposed in second floor portion 202 of housing 200.

A pulley 513 is connected to an output shaft of X-axis motor 511. A pulley 514 is disposed at a position away from pulley 513 in the X-axis direction toward the rear surface of housing 200. An X-axis belt 512 is wound on pulleys 513 and 514. X-axis belt 512 extends in the X-axis direction. X-axis belt 512 receives the driving force generated by X-axis motor 511 and thus rotates in opposite directions.

An X-axis rail 521 is disposed in a vicinity of one edge of support plate 500 extending in the X-axis direction. X-axis rail 521 extends in the X-axis direction. An X-axis slider 522 is mounted on X-axis rail 521. X-axis slider 522 is guided by X-axis rail 521 and thus reciprocates in the X-axis direction.

An X-axis rail 531 is disposed in a vicinity of the other edge of support plate 500 extending in the X-axis direction. X-axis rail 531 extends in the X-axis direction. X-axis rail 521 and X-axis rail 531 are spaced in the Y-axis direction and disposed in parallel. An X-axis slider 532 is mounted on X-axis rail 531. X-axis slider 532 is guided by X-axis rail 531 and thus reciprocates in the X-axis direction.

X-axis slider 522 and X-axis slider 532 reciprocate in the X-axis direction together with X-axis belt 512 that receives the driving force generated by X-axis motor 511 and thus rotates.

A coupler 533 is mounted on X-axis slider 532. A movable plate 540 has opposite ends supported by X-axis slider 522 and coupler 533. Movable plate 540, having a longitudinal direction in the Y-axis direction, has a first end fixed to X-axis slider 522. Movable plate 540 has a second end fixed to coupler 533. Movable plate 540 has a through hole 541 penetrating movable plate 540 in a direction along its thickness and extending in the Y-axis direction. A Y-axis rail 561 is mounted on movable plate 540.

Moving device 5 includes a Y-axis motor 551. Y-axis motor 551 generates a driving force to move holding device 40 in the Y-axis direction. Y-axis motor 551 is supported by support plate 500, and is arranged to be suspended below support plate 500. Y-axis motor 551 is disposed in second floor portion 202 of housing 200. X-axis motor 511 and Y-axis motor 551 constitute an actuator that moves holding device 40 in a horizontal direction (or directions along the X and Y axes).

A pulley 553 is coupled to an output shaft of Y-axis motor 551. A pulley 554 is disposed at a position away from pulley 553 in the X-axis direction toward the rear surface of housing 200. Pulleys 553 and 554 are disposed in a vicinity of X-axis rail 531. A pulley 555 is disposed at a position which is between pulleys 553 and 554 in the X-axis direction and is in a vicinity of X-axis rail 521 in the Y-axis direction. Pulley 555 is supported on a lower surface of movable plate 540. A Y-axis belt 552 is wound on pulley 553, pulley 554, and pulley 555. Y-axis belt 552 receives the driving force generated by Y-axis motor 551 and thus rotates in opposite directions.

Y-axis belt 552 is generally in the form of a letter T in plan view. A pair of idlers 556 and 557 is disposed at a position where the lateral and longitudinal lines of the letter T meet. Idlers 556 and 557 guide Y-axis belt 552. Idlers 556 and 557 are supported on the lower surface of movable plate 540.

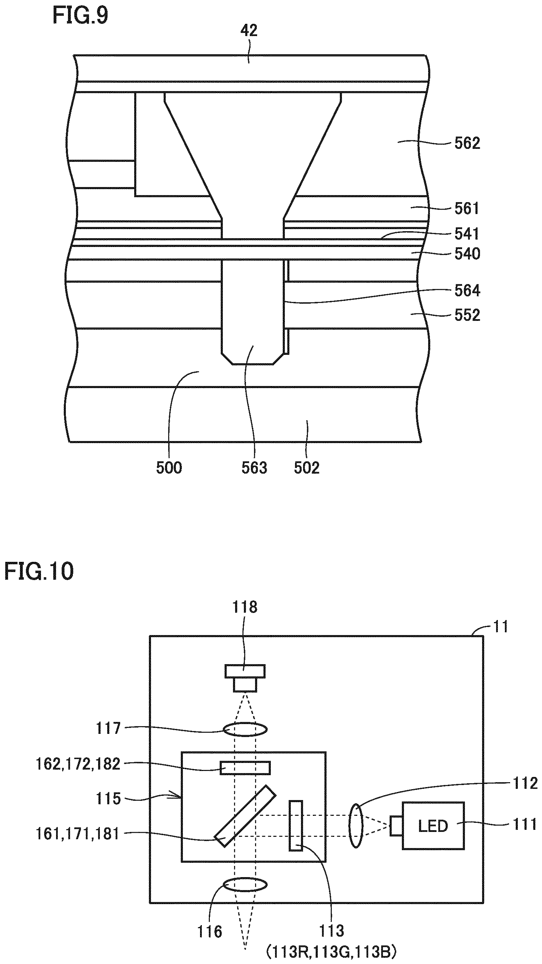

Fig. 9 is an enlarged perspective view showing a vicinity of holding section 42 mounted on movable plate 540. A Y-axis slider 562 is mounted on Y-axis rail 561. Y-axis slider 562 is guided by Y-axis rail 561 and thus reciprocates in the Y-axis direction.

Holding section 42 is mounted on Y-axis slider 562. Holding section 42 is mounted on movable plate 540 via Y-axis slider 562 and Y-axis rail 561. An arm portion 563 extends downward from Y-axis slider 562. Arm portion 563 extends in the Z-axis direction through through hole 541 of movable plate 540. A gripper 564 is provided at a lower end of arm portion 563. Gripper 564 grips Y-axis belt 552.

When X-axis motor 511 is driven in response to a command received from control device 20 (see Fig. 1), X-axis belt 512 rotates, and as X-axis belt 512 rotates, X-axis sliders 522 and 532 move in the X-axis direction. When the X-axis sliders move, movable plate 540, Y-axis rail 561 mounted on movable plate 540, and pulley 555 and idlers 556 and 557 supported by movable plate 540 move together in the X-axis direction. Holding section 42 mounted on movable plate 540 via Y-axis slider 562 moves in the X-axis direction.

When Y-axis motor 551 is driven in response to a command received from control device 20, Y-axis belt 552 rotates. Gripper 564 that grips Y-axis belt 552 moves in the Y-axis direction as Y-axis belt 552 rotates. This moves Y-axis slider 562 and holding section 42 mounted on Y-axis slider 562 together in the Y-axis direction.

In this way, by driving moving device 5 that horizontally moves holding section 42 by a belt and pulley, X-axis motor 511 and Y-axis motor 551 that are an actuator for moving device 5 can be disposed at positions different in the Z-axis direction from that of holding section 42 that moves above support plate 500. X-axis belt 512 and pulleys 513 and 514 for moving holding section 42 in the X-axis direction and Y-axis belt 552 and pulleys 553, 554 and 555 for moving holding section 42 in the Y-axis direction can be disposed on the same plane. This allows moving device 5 to be reduced in size.

X-axis motor 511 and Y-axis motor 551 are both supported below support plate 500, and either one of X-axis motor 511 and Y-axis motor 551 does not move the other. A portion that is carried by X-axis motor 511 and Y-axis motor 551 is reduced in weight, and a requirement for X-axis motor 511 and Y-axis motor 551 in performance can be reduced. This can reduce a cost for manufacturing moving device 5. Allowing holding section 42 to move fast allows an analyte to be analyzed in a reduced period of time.

<Optical Unit 11>

Holding device 40 shown in Fig. 6 is moved toward the rear surface of housing 200 by moving device 5 so that temperature adjustment section 41 is disposed directly under optical unit 11. Optical unit 11 irradiates with light for excitation a liquid which is contained in PCR container 51b held by temperature adjustment section 41 and contains an analyte, and optical unit 11 detects fluorescence emitted from the analyte. Optical unit 11 will more specifically be described below.

Fig. 10 schematically shows a configuration of optical unit 11. Optical unit 11 mainly includes a light source 111, a fluorescence spectroscopy section 115, and a photodetector 118.

Light source 111 is, for example, a white LED (Light Emitting Diode). Light source 111 emits multicolor light (white light). The white light emitted from light source 111 is collimated by a lens 112 and thus reaches fluorescence spectroscopy section 115.

Fluorescence spectroscopy section 115 includes a filter 113 for excitation light. The white light is made substantially monochrome by filter 113. Filter 113 includes a red filter 113R, a green filter 113G, and a blue filter 113B. The white light passes through red filter 113R to be red monochrome light, passes through green filter 113G to be green monochrome light, and passes through blue filter 113B to be blue monochrome light. Filter 113 may be a bandpass filter.

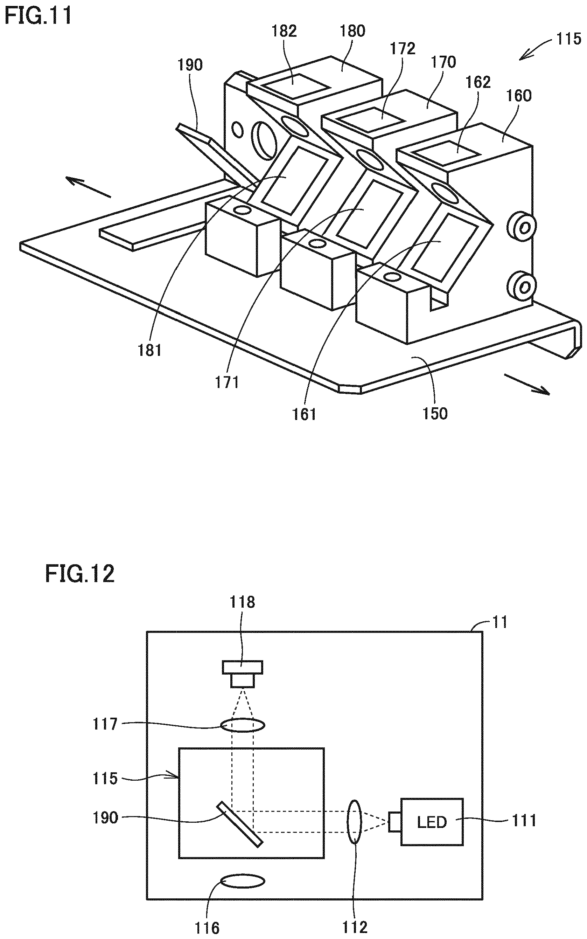

Fig. 11 is a perspective view of a configuration of fluorescence spectroscopy section 115. Fluorescence spectroscopy section 115 includes a red unit 160, a green unit 170, and a blue unit 180, and is adapted to switch three wavelengths. Red unit 160, green unit 170, blue unit 180, and a reflection plate 190 are mounted on an upper surface of a supporting plate portion 150.

Fluorescence spectroscopy section 115 shown in Fig. 11 is integrally configured to be capable of linearly reciprocating in a direction orthogonal to a plane of a measuring optical system (a direction indicated in Fig. 11 by a solid arrow, and a direction in Fig. 10 perpendicular to the plane of the sheet of the figure), and can thus switch a wavelength to be measured. Fluorescence spectroscopy section 115 may be moved by a driver including a motor, a pulley, and a belt. Fluorescence spectroscopy section 115 may be moved by a driver including another mechanism such as a rack and pinion mechanism. Moving fluorescence spectroscopy section 115 allows switching of a wavelength to be measured.

Red unit 160 includes red filter 113R (hidden in Fig. 11 and thus not shown) described above, a dichroic mirror 161, and a fluorescence filter 162. Green unit 170 includes green filter 113G (hidden in Fig. 11 and thus not shown) described above, a dichroic mirror 171, and a fluorescence filter 172. Blue unit 180 includes blue filter 113B (hidden in Fig. 11 and thus not shown) described above, a dichroic mirror 181, and a fluorescence filter 182. Dichroic mirrors 161, 171, and 181 are disposed at an angle of 45° with respect to a collimated beam that reaches fluorescence spectroscopy section 115.

Dichroic mirrors 161, 171, and 181 have an optical characteristic that substantially reflects light of the wavelength band of the excitation light. Therefore, most of the excitation light is reflected by dichroic mirrors 161, 171, and 181, directed downward in Fig. 10, condensed by lens 116, and thus irradiates a surface of a liquid of a specimen in PCR container 51b.

The specimen irradiated with the excitation light generates fluorescence, which partially reaches and is generally collimated by lens 116 and thus directed upward in Fig. 10, and again reaches dichroic mirrors 161, 171, and 181.

Dichroic mirrors 161, 171, and 181 have an optical characteristic that substantially transmits light of the wavelength band of fluorescence. Therefore, most of fluorescence passes through dichroic mirrors 161, 171, and 181 and reaches fluorescence filters 162, 172, and 182. After fluorescence filters 162, 172, and 182 cut energy in an extra wavelength band other than the wavelength band of fluorescence, the fluorescence is condensed by a lens 117, incident on photodetector 118, and converted into an electric signal.

As shown in Fig. 11, fluorescence spectroscopy section 115 further includes reflection plate 190. Reflection plate 190 is a member that forms an optical path for guiding light from light source 111 directly to photodetector 118. Reflection plate 190 is, for example, a flat plate of metal. Reflection plate 190 has a surface subjected to black surface treatment. When measuring an amount of energy of light source 111, fluorescence spectroscopy section 115 is moved and thus positioned so that reflection plate 190 is irradiated with light emitted from light source 111.

Fig. 12 schematically illustrates an optical path when measuring light of a light source. Reflection plate 190 forms a surface orthogonal to those of dichroic mirrors 161, 171, and 181 described above. Reflection plate 190 is irradiated with white light collimated by lens 112, and a portion of diffuse reflection of light from reflection plate 190 reaches lens 117 and is condensed by lens 117 and incident on photodetector 118. An amount of energy of light source 111 can thus be measured without a specimen interposed.

An initial value for an amount of energy of light source 111 can be stored as a reference in a memory of control device 20. As analysis apparatus 2 is operated for an increased period of time, light source 111 deteriorates, and even if an amount of energy radiated by light source 111 changes, an influence of the deterioration can be corrected and a result can be output. Since it is unnecessary to additionally introduce a separate photodetector for measuring light of a light source and a light detection system used for measuring fluorescence can be used as it is, it is also advantageous in terms of cost reduction and space saving.

Generally, energy of fluorescence of a specimen is much smaller than energy of excitation light applied to the specimen. Accordingly, the light detection system is often gain-set depending on a difference in amount of energy between excitation light and fluorescence. In that case, when photodetector 118 is irradiated with light of a light source via reflection plate 190, measurement may become impossible due to overgain. In order to avoid such a situation, reflection plate 190 is not a mirror or a similar optical element having high reflectance and mostly providing regular reflection, and instead a general metal plate subjected to black surface treatment is used to guide to photodetector 118 only a component of diffuse reflection from reflection plate 190. Despite that, if the energy is still excessive, a neutral-density filter may be disposed at a position corresponding to a location where filter 113 is disposed (e.g., immediately after lens 112).

Instead of a configuration in which light emitted from a light source is directly incident on a detector system, by detecting light further indirectly emitted from the light source, the light source' energy may further be attenuated and guided to photodetector 118. For example, the Fig. 12 optical unit 11 may have reflection plate 190 removed therefrom and a surface which reflects light of a light source radiated outside optical unit 11 may be assumed to be a surface of the light source, and a second reflection or a reflection of a higher order of light radiated from the surface of the light source may reach photodetector 118.

In adjustment of assembling of optical unit 11, a determined fluorescence sample serving as a reference for a fluorescence signal value can be measured and a result thereof can be managed and stored as a value unique to each optical unit 11. Thus, a difference caused when the same sample is measured due to a difference of individual optical unit 11 can be corrected and a factor of variation caused by a difference among equipment between apparatuses and aging of each apparatus with time can be eliminated to provide a more reliable result.

Specifically, at a time of adjustment in a factory, a reference sample fluorescence measurement value em (1) for a first wavelength, a reference sample fluorescence measurement value em (2) for a second wavelength, a reference sample fluorescence measurement value em (3) for a third wavelength, and an initial light intensity value i0 of light source 111 are photometrically measured for each individual apparatus and stored in non-volatile memory in the apparatus. After analysis apparatus 2 is installed when it is adjusted a photometric immediate value vi (n) is corrected, as indicated below, and output as v(n), where n is an integer equal to or larger than 1 and equal to or smaller than 3).

$$v(n) = vi(n) \times (A(n)/em(n)) \times (i0/ic)$$

where ic is a light intensity value of light source 111 periodically measured, updated and recorded. A(n) is any constant and is a common value among all apparatuses.

Thus, whichever apparatus may be used for measurement and whenever it may be timed therefor, substantially the same value is obtained insofar as the same sample is measured.

Optical unit 11 described above including an accuracy compensation mechanism that forms an optical path for directly guiding light from light source 111 to photodetector 118 without a specimen interposed can reduce an effect that variation in luminance of light source 111 has on a final fluorescence detection intensity value. Furthermore, it can reduce variation in a fluorescence detection intensity value associated with a difference among equipment between apparatuses. A constant fluorescence detection result can be obtained regardless of individual apparatuses or timing of measurement (or a total operation time of the apparatus).

<Exemplary variation of temperature adjustment section 41>

When the analysis process described with reference to Fig. 4 is performed, temperature adjustment section 41 is controlled in order to adjust the temperature of an analyte in PCR container 51. In order to reduce a period of time required for the analysis process, there is a demand for increasing a rate of increasing and decreasing the temperature of the analyte. Accordingly, there is a demand for minimizing temperature adjustment section 41 in heat capacity while ensuring efficiency of heat conduction from temperature source 44 to PCR container 51. When the analytes in a plurality of PCR containers 51 are simultaneously analyzed by the same, single analysis apparatus 2, there is also a demand for suppressing variation of the analytes in temperature.

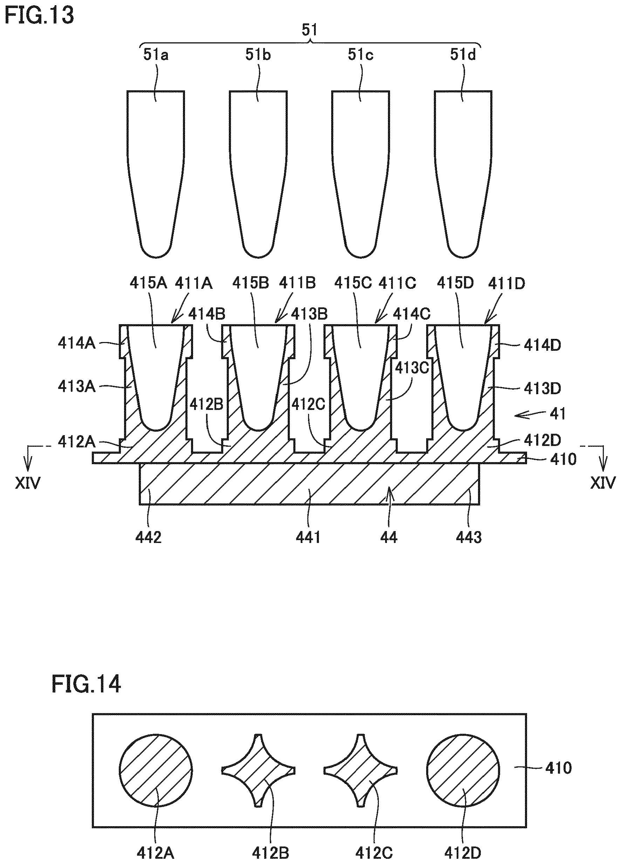

Fig. 13 is a partial cross section specifically showing a configuration of temperature adjustment section 41 in an exemplary variation. Temperature adjustment section 41 shown in Fig. 13 includes a flat plate-shaped base portion 410 and four container receptacle portions 411A, 411B, 411C and 411D provided on a surface of base portion 410. Container receptacle portions 411A, 411B, 411C and 411D project from base portion 410. Base portion 410 and each container receptacle portion 411A, 411B, 411C, 411D are integrally formed of a good thermal conductor such as a metal material represented by aluminum.

Temperature source 44 is attached to a back surface of base portion 410. Temperature source 44 is in thermal contact with base portion 410. Temperature source 44 is, for example, a Peltier element. Temperature source 44 has a center portion 441 and edge portions 442 and 443. Container receptacle portion 411A is located at a position opposite to edge portion 442 with base portion 410 interposed. Container receptacle portion 411D is located at a position opposite to edge portion 443 with base portion 410 interposed. Container receptacle portions 411B and 411C are located at positions opposite to center portion 441 with base portion 410 interposed.

Container receptacle portion 411A has a foot portion 412A connected to base portion 410, a top portion 414A farthest away from base portion 410, and a radially smaller portion 413A between foot portion 412A and top portion 414A. Container receptacle portion 411A is open at top portion 414A, and has a receptacle hole 415A formed therein. Receptacle hole 415A has substantially the same shape as the tip portion of PCR container 51a. Receptacle hole 415A has a tapered shape corresponding to the shape of the tip portion of PCR container 51a. When the tip portion of PCR container 51a is received in receptacle hole 415A and PCR container 51a is thus thermally brought into contact with container receptacle portion 411A, PCR container 51a receives heat transferred thereto, and the analyte in PCR container 51a varies in temperature.

Radially smaller portion 413A is formed to have an outer diameter smaller than that of foot portion 412A. Foot portion 412A and radially smaller portion 413A each have a generally cylindrical outer peripheral surface. The outer peripheral surface of radially smaller portion 413A is smaller in diameter than the outer peripheral surface of foot portion 412A. Foot portion 412A is formed solid. Radially smaller portion 413A has an open end on the side of top portion 414A and a closed end on the side of foot portion 412A. A portion of receptacle hole 415A is formed inside radially smaller portion 413A, and radially smaller portion 413A is internally hollow and has a bottomed shape.

As well as container receptacle portion 411A, container receptacle portions 411B, 411C and 411D have foot portions 412B, 412C and 412D, top portions 414B, 414C and 414D, and radially smaller portions 413B, 413C and 413D, respectively. Container receptacle portions 411B, 411C, and 411D have receptacle holes 415B, 415C, and 415D, respectively, formed therein.

Fig. 14 is a cross section of temperature adjustment section 41 taken along a line XIV-XIV indicated in Fig. 13. As shown in Fig. 14, foot portions 412A and 412D have a circular cross section. In contrast, foot portions 412B and 412C have a substantially cross-shaped cross section. Foot portions 412B and 412C in cross section are smaller in area than foot portions 412A and 412D in cross section.

Foot portions 412A, 412B, 412C and 412D have a substantially equal maximum diameter dimension. Radially smaller portions 413B, 413C, 413D have the same shape as radially smaller portion 413A. Radially smaller portion 413D has a smaller diameter than foot portion 412D. A diameter of a cylindrical outer peripheral surface of radially smaller portion 413B is smaller than a maximum diameter dimension of foot portion 412B. A diameter of a cylindrical outer peripheral surface of radially smaller portion 413C is smaller than a maximum diameter dimension of foot portion 412C.

Top portions 414A, 414B, 414C and 414D have the same hollowed cylindrical shape. Top portions 414A, 414B, 414C and 414D have an outer diameter larger than that of radially smaller portions 413A, 413B, 413C and 413D. Top portions 414A, 414B, 414C and 414D having a large thickness enhance container receptacle portions 411A, 411B, 411C and 411D in strength and hence temperature adjustment section 41 in durability and reliability.

Temperature adjustment section 41 shown in Figs. 13 and 14 has radially smaller portion 413A with a reduced outer diameter and a reduced thickness. Temperature adjustment section 41 having radially smaller portion 413A is smaller in heat capacity than a temperature adjustment section having no radially smaller portion. In contrast, foot portion 412A closer to temperature source 44 than radially smaller portion 413A, that has a maximum diameter dimension larger than the outer diameter of radially smaller portion 413A and has a large thickness, ensures efficiency of heat conduction from temperature source 44 to PCR container 51a. This allows heat generated by temperature source 44 to be rapidly transferred to the analyte in PCR container 51a, and can increase a temperature at which the analyte's temperature is raised and dropped.

When temperature source 44 is a Peltier element, edge portions 442 and 443 tend to generate and absorb heat in an amount relatively smaller than center portion 441 does. In temperature adjustment section 41 shown in Figs. 13 and 14, amounts of heat conduction from temperature source 44 to container receptacle portions 411A, 411B, 411C and 411D are different depending on a difference between center portion 441 and edge portions 442 and 443 of temperature source 44 in amount of heat absorbed and generated thereby. Specifically, an amount of heat conduction is proportional to an area in cross section of a heat conduction path, and accordingly, an area in cross section of a heat conduction path to container receptacle portions 411B and 411C directly above center portion 441 of temperature source 44 is made different from an area in cross section of a heat conduction path to container receptacle portions 411A and 411D located at edge portions 442 and 443 of temperature source 44.

More specifically, foot portions 412B and 412C of container receptacle portions 411B and 411C closer to center portion 441 of temperature source 44 have a smaller area in cross section than foot portions 412A and 412D of container receptacle portions 411A and 411D closer to edge portions 442 and 443 of temperature source 44. Foot portions 412B and 412C directly above center portion 441 absorbing and generating heat in a relatively large amount are relatively reduced in area in cross section and hence in amount of heat conduction, and foot portions 412A and 412D located at edge portions 442 and 443 absorbing and generating heat in a relatively small amount are relatively increased in area in cross section and hence in amount of heat conduction.

Changing each foot portion 412A, 412B, 412C, 412D in area in cross section to correspond to a difference in amount of heat conduction from temperature source 44 to each foot portion 412A, 412B, 412C, 412D reduces variation in amount of heat flowing into a portion of each container receptacle portion 411A, 411B, 411C, 411D that comes into contact with PCR container 51. This can reduce variation in temperature of an analyte in PCR container 51 accommodated in each container receptacle portion 411A, 411B, 411C, 411D.

Radially smaller portions 413A, 413B, 413C and 413D and top portions 414A, 414B, 414C and 414D closer to PCR container 51 than foot portions 412A, 412B, 412C and 412D different in area in cross section are identical in shape and equal in heat capacity. This allows a more uniform transient response when an analyte in PCR container 51 accommodated in each container receptacle portion 411A, 411B, 411C, 411D rises and drops in temperature.

A relationship between heat capacity, thermal resistance, and temperature (a temperature difference before and after thermal resistance) at a given time point is represented by:

$$\Delta T = \Delta T0 \cdot EXP(-t/RC)$$

where $\Delta T$ represents a temperature difference after t seconds, $\Delta T0$ represents a temperature difference at a time point 0, R represents thermal resistance and C represents heat capacity.

PCR containers 51 accommodated in container receptacle portions 411A, 411B, 411C and 411D have equal heat capacities. An amount of heat generated at center portion 441 of temperature source 44 is different from that of heat generated at edge portions 442 and 443 of temperature source 44. In this case, equalizing PCR containers 51 accommodated in container receptacle portions 411B and 411C directly above center portion 441 and PCR containers 51 accommodated in container receptacle portions 411A and 411D at edge portions 442 and 443 in temperature after t seconds requires that an amount of heat conduction from center portion 441 to PCR containers 51 accommodated in container receptacle portions 411B and 411C for t seconds and that of heat conduction from edge portions 442 and 443 to PCR containers 51 accommodated in container receptacle portions 411A and 411D for t seconds match.

Changing container receptacle portions at foot portions 412A, 412B, 412C, 412D in area in cross section can eliminate a difference between center portion 441 and edge portions 442 and 443 of temperature source 44 in amount of heat generated thereby to substantially equalize an amount of heat conduction from center portion 441 to PCR containers 51 accommodated in container receptacle portions 411B and 411C and that of heat conduction from edge portions 442 and 443 to PCR containers 51 accommodated in container receptacle portions 411A and 411D. A relationship between foot portions 412B and 412C and foot portions 412A and 412D in area in cross section can be determined by analyzing a positional relationship of container receptacle portions 411A, 411B, 411C and 411D with respect to temperature source 44 and thermal resistance resulting from a shape in cross section of each foot portion 412A, 412B, 412C, 412D, for example through a simulation using a finite element method (FEM). While a case with four container receptacle portions has been described herein, a similar approach can be used to determine an area in cross section of the foot portion of each container receptacle portion for any other number n of container receptacle portions, where n is an integer.

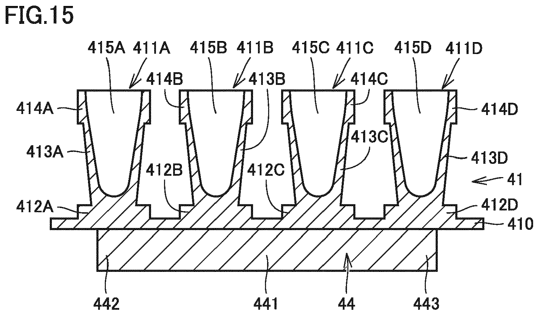

Fig. 15 is a cross section specifically showing a configuration of temperature adjustment section 41 in another exemplary variation. Temperature adjustment section 41 shown in Fig. 15 has radially smaller portion 413A with an outer peripheral surface tapered, rather than cylindrically. Radially smaller portion 413A has a frustoconical geometry. Radially smaller portion 413A has an outer diameter larger at an end portion closer top portion 414A than at an end portion closer to foot portion 412A. Other radially smaller portions 413B, 413C, 413D also have the same shape as radially smaller portion 413A.

When temperature adjustment section 41 shown in Fig. 15 is compared with that shown in Fig. 13, the former has radially smaller portion 413A with an outer diameter closer to foot portion 412A that is smaller than the latter, and hence with a smaller thickness as a whole than the latter. This can reduce radially smaller portion 413A more in heat capacity, and allows heat generated by temperature source 44 to be more rapidly transferred to the analyte in PCR container 51 and can further increase a rate of raising and dropping the analyte in temperature.

[Aspects]

It will be understood by those skilled in the art that the exemplary embodiments described above are specific examples of the following aspects:

(Clause 1) According to one aspect, an analysis apparatus comprises: a housing that has an opening; a door that opens and closes the opening; an analyte container setting section that is accommodated in the housing and allows an analyte container to be set therein, the analyte container containing an analyte to be analyzed; a blower that creates an airflow in the housing; and an air filter that filters air blown by the blower. As seen along an airflow created by the blower while the door is opened, the analyte container setting section is provided upstream of the blower, the opening is provided upstream of the analyte container setting section, and the air filter is provided downstream of the analyte container setting section.

The blower induces air around the housing to create airflow. The blower creates the airflow through the opening, the analyte container setting section, and the air filter in this order. The blower is provided downstream of the opening as seen along an airflow.

When the operator sets a subject to be analyzed such as an analyte container in the analysis apparatus, a flow of air through the opening into the housing is created to prevent harmful substances such as viruses contained in an analyte from being discharged toward the operator. This can reduce a possibility that the operator may be infected with the viruses or the like. The air flowing into the housing through the opening passes around the analyte container setting section. Creating a flow of air around the analyte container setting section suppresses floating and entering of an analyte in an analyte container into another analyte container and can thus reduce a possibility of analyte contamination. The air having passed around the analyte container setting section is sucked into the air filter and thus filtered thereby. The air filter adsorbs and thus removes harmful substances from air, and thus allows harmless air be discharged outside the housing.

(Clause 2) In the analysis apparatus according to clause 1, the opening may open upward, and the blower and the air filter may be disposed below the analyte container setting section.

With this arrangement, an airflow created by the blower will flow downward through the opening, and an airflow through the opening into the housing is ensured. The airflow further flows downward around the analyte container setting section and passes through the air filter. Even if air flowing around the analyte container setting section contains harmful substances, the air filter can reliably remove the harmful substances.

(Clause 3) In the analysis apparatus according to clause 1, the analyte container setting section may have a suction hole that sucks air from outside the analyte container setting section into the analyte container setting section, and a ventilation hole that allows air to flow out from inside the analyte container setting section to outside the analyte container setting section.

Creating a flow of air passing through the analyte container setting section can more reliably suppress contamination of an analyte accommodated in an analyte container set in the analyte container setting section.

(Clause 4) In the analysis apparatus according to clause 1, the analyte container setting section may further allow a reagent container to be set therein, the reagent container containing a reagent therein to be used for an analysis.

This can more reliably suppress infection of an operator and contamination of an analyte when dispensing the reagent contained in the reagent container set in the analyte container setting section.

(Clause 5) In the analysis apparatus according to clause 1, the analyte container setting section may further allow a dispensing pipette tip to be set therein for dispensing an analyte introduced in an analyte container.

This can more reliably suppress infection of an operator and contamination of an analyte when a reagent is dispensed using the dispensing pipette tip.

(Clause 6) In the analysis apparatus according to clause 1, the housing may have a front surface and a rear surface, and the housing is provided with the opening on the side of the front surface and has an exhaust port through the rear surface to exhaust air outside the housing.

Air is exhausted from housing 200 toward the rear surface, and a possibility that air containing harmful substances is discharged toward an operator can further be reduced.

(Clause 7) In the analysis apparatus according to clause 1, the air filter may be a HEPA filter.

The HEPA filter can remove harmful substances in the air highly efficiently to discharge harmless air to outside the housing, and can thus further reduce a possibility that air containing harmful substances is discharged toward the operator.

(Clause 8) According to one aspect, a temperature adjustment device can accommodate a container therein and transfers heat from a temperature source to the container. The temperature adjustment device includes a base portion in thermal contact with the temperature source, a foot portion connected to the base portion, and a radially smaller portion having an outer diameter smaller than that of the foot portion. A receptacle hole is formed inside the radially smaller portion to accommodate the container.

Increasing the foot portion in outer diameter ensures efficiency of heat conduction from the temperature source to the container. Reducing the radially smaller portion in outer diameter can reduce the radially smaller portion in heat capacity. The temperature adjustment device can thus rapidly transfer heat from the temperature source to the container.

(Clause 9) In the temperature adjustment device according to clause 8, the temperature source may have a center portion that generates heat in a relatively large amount and an edge portion that generates heat in a relatively small amount, and the temperature adjustment device may include a plurality of foot portions and a plurality of radially smaller portions, and the foot portion closer to the center portion may be smaller in area in cross section than the foot portion closer to the edge portion.

Thus, when a plurality of containers are accommodated in the temperature adjustment device, variation in amount of heat conduction from the temperature source to each container can be reduced, and each container's variation in temperature can thus be reduced.

It should be understood that the presently disclosed embodiments are illustrative and non-restrictive in any respect. The scope of the present invention is defined by the terms of the claims, rather than the above description, and is intended to include any modifications within the meaning and scope equivalent to the terms of the claims.

REFERENCE SIGNS LIST

1 analysis system, 2 analysis apparatus, 3 terminal 4, 5 moving device, 10 inspection device, 11 optical unit, 12 dispensing unit, 13 syringe, 14 opening/closing unit, 16 irradiation unit, 20 control device, 30 temperature adjustment device, 40 holding device, 41 temperature adjustment section, 42 holding section, 43 pipette tip discarding section, 44 temperature source, 45 heat lid, 50 container, 51 PCR container, 52 reagent container, 53 dispensing pipette tip, 54 analyte container, 61 suction hole, 62 ventilation hole, 111 light source 112, 116, 117 lens, 113 filter, 115 fluorescence spectroscopy section, 118 photodetector, 150 supporting plate portion, 160 red unit, 161, 171, 181, dichroic mirror, 162, 172, 182, fluorescence filter, 170 green unit, 180 blue unit, 190 reflection plate, 200 housing, 201 first floor portion, 202 second floor portion, 203 third floor portion, 204 fourth floor portion, 211 upper door, 212 lower door, 220 user operation section, 221 opening, 230 blower, 240 air filter, 241 prefilter, 250 exhaust port, 410 base portion, 411A, 411B, 411C, 411D container receptacle portion, 412A, 412B, 412C, 412D foot portion, 413A, 413B, 413C, 413D radially smaller portion, 414A, 414B, 414C, 414D top portion, 415A, 415B, 415C, 415D receptacle hole, 441 center portion, 442, 443 edge portion, 500 support plate, 502 notch, 511 X-axis motor, 512 X-axis belt, 513, 514, 553, 554, 555 pulley, 521, 531 X-axis rail, 522, 532 X-axis slider, 533 coupler, 540 movable plate, 541 through hole, 551 Y-axis motor, 552 Y-axis belt, 556, 557 idler, 561 Y-axis rail, 562 Y-axis slider, 563 arm, 564 gripper.

## Claims

1. An analysis apparatus comprising:

   a housing that has an opening;
   a door that opens and closes the opening;
   an analyte container setting section that is accommodated in the housing and allows an analyte container to be set therein, the analyte container containing an analyte to be analyzed;
   a blower that creates a flow of air in the housing; and
   an air filter that filters air blown by the blower, wherein
   as seen along a flow of air created by the blower while the door is opened, the analyte container setting section is provided upstream of the blower, the opening is provided upstream of the analyte container setting section, and the air filter is provided downstream of the analyte container setting section.

2. The analysis apparatus according to claim 1, wherein

   the opening is open upward, and
   the blower and the air filter are disposed below the analyte container setting section.

3. The analysis apparatus according to claim 1 or 2, wherein the analyte container setting section has a suction hole that sucks air from outside the analyte container setting section into the analyte container setting section, and a ventilation hole that allows air to flow out from inside the analyte container setting section to outside the analyte container setting section.

4. The analysis apparatus according to any one of claims 1 to 3,
   wherein the analyte container setting section further allows a reagent container to be set therein, the reagent container containing a reagent therein to be used for an analysis.

5. The analysis apparatus according to any one of claims 1 to 4,
   wherein the analyte container setting section further allows a dispensing pipette tip to be set therein for dispensing an analyte introduced in the analyte container.

6. The analysis apparatus according to any one of claims 1 to 5,
   wherein the housing has a front surface and a rear surface, and the housing is provided with the opening on a side of the front surface and has an exhaust port through the rear surface to exhaust air outside the housing.

7. The analysis apparatus according to any one of claims 1 to 6, wherein the air filter is a HEPA filter.

FIG.1

EP 4 234 677 A1

FIG.2

FIG.3

# FIG.4

| S1 | S2 | S3 | S4 | S5 | S6 |
|----|----|----|----|----|----|
| INJECT SAMPLE | ADD ANALYTE TREATMENT LIQUID | HEAT & RAPIDLY COOL | ADD EACH REAGENT | THERMAL CYCLE | DETECT THREE-WAVELENGTH FLUORESCENCE |

・REACTION LIQUID
・PRIMER/PROBE
・ENZYME

EP 4 234 677 A1

FIG.5

EP 4 234 677 A1

FIG.6

FIG.7

FIG.8

EP 4 234 677 A1

FIG.9

FIG.10

# FIG.11

# FIG.12

FIG.13

FIG.14

FIG.15

## INTERNATIONAL SEARCH REPORT

International application No.

**PCT/JP2021/037177**

### A. CLASSIFICATION OF SUBJECT MATTER

*C12M 1/00*(2006.01)i; *G01N 1/00*(2006.01)i; *G01N 1/28*(2006.01)i
FI:   C12M1/00 A; G01N1/00 101G; G01N1/28 J

According to International Patent Classification (IPC) or to both national classification and IPC

### B. FIELDS SEARCHED

Minimum documentation searched (classification system followed by classification symbols)

C12M1/00; G01N1/00; G01N1/28

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/MEDLINE/EMBASE/BIOSIS (STN), JSTPlus/JMEDPlus/JST7580 (JDreamIII), PubMed, Japio-GPG/FX

### C. DOCUMENTS CONSIDERED TO BE RELEVANT

| Category* | Citation of document, with indication, where appropriate, of the relevant passages | Relevant to claim No. |
|---|---|---|
| Y | JP 2015-526060 A (LIFE TECHNOLOGIES CORPORATION) 10 September 2015 (2015-09-10)<br>paragraphs [0019], [0021]-[0022], fig. 1, 2 | 1-7 |
| Y | WO 2018/230043 A1 (HITACHI INDUSTRY EQUIPMENT SYSTEMS CO LTD) 20 December 2018 (2018-12-20)<br>claims 1, 8, fig. 1B | 1-7 |
| Y | WO 2013/150684 A1 (HITACHI INDUSTRY EQUIPMENT SYSTEMS CO LTD) 10 October 2013 (2013-10-10)<br>claim 1, fig. 1A | 1-7 |
| Y | JP 2012-021752 A (HITACHI INDUSTRY EQUIPMENT SYSTEMS CO LTD) 02 February 2012 (2012-02-02)<br>claim 1, fig. 1 | 1-7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2021/037177** |

| Patent document cited in search report | | | Publication date (day/month/year) | Patent family member(s) | | | Publication date (day/month/year) |
| --- | --- | --- | --- | --- | --- | --- | --- |
| JP | 2015-526060 | A | 10 September 2015 | WO 2013/165594 A1 paragraphs [0050], [0052]-[0053], fig. 1, 2 US 2013/0288873 A1 EP 2844392 A1 | | | |
| WO | 2018/230043 | A1 | 20 December 2018 | US 2020/0023349 A1 claims 1, 8, fig. 1B | | | |
| WO | 2013/150684 | A1 | 10 October 2013 | (Family: none) | | | |
| JP | 2012-021752 | A | 02 February 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4785862 B